# EUROPEAN PATENT APPLICATION

(11) **EP 1 564 582 A2**
(43) Date of publication of application: **17.08.2005**
(21) Application number: 05075213.8
(22) Date of filing: 27.01.2005
(51) Int. Cl.: G02F 1/13357, B60K 35/00

(54) **Display system having electronically controlled viewing window**

(30) Priority: 17.02.2004 US 779936
(71) Applicant: Delphi Technologies, Inc., Troy, MI 48007 (US)
(72) Inventor: Scharenbroch, Gregory K., Kokomo IN 46901 (US); Harter Jr., Joseph E., Kokomo IN 46902 (US); Vincen, Mark R., Noblesville IN 46060 (US)
(74) Representative: Denton, Michael John

(57) **Abstract**

A display system (22) and method provides images viewable within an electrically controllable viewing window for controlled viewing by the driver (16) and passenger (18) in a vehicle (10). The display system (22) includes a display (34) for generating an image that is viewable within a viewing window (56, 56'), and a backlight (28) disposed behind the display (34) for generating light for illuminating the display (34). The display system (22) has a light control medium (30, 32) for controlling directivity of the light illuminated on the display (34). The display system (22) further has a control device (40, 42) for controlling the light control medium (30, 32) to change the viewing window (56, 56') to control images for viewing by the driver (16) to reduce distraction thereof.

## Description

### Technical Field

The present invention generally relates to electronic display systems and, more particularly, relates to controlling the viewing window of a display system to viewers, such as occupants in a vehicle to minimize distraction to the driver of the vehicle.

### Background of the Invention

Automotive vehicles are increasingly equipped with various electronic entertainment and information systems and mobile multimedia devices, generally referred to herein as infotainment devices and systems. For example, automotive personal computing (PC) devices have been installed in vehicles to allow personal computing, web browsing, accessing e-mail, and other Internet access. Additionally, many vehicles are equipped with navigation systems, television, and video game systems. These and other infotainment systems typically include a human machine interface (HMI) for enabling the user to interface with the system. The human machine interface typically includes a display for viewing messages, navigational maps, video images, and other information. In addition, the human machine interface may include input controls for manipulation by a user to input commands to the infotainment system.

In order to reduce distraction to the driver (operator) of the vehicle, it may be desirable to inhibit the availability of some display functions (features) of the infotainment system to the driver while the vehicle is in motion. It has been proposed to allow full display functionality of the display when the vehicle is stopped, and to allow less display functionality of the display when the vehicle is in motion. According to this proposal, the vehicle must be stopped in order to make available certain display features of the infotainment system, such as to allow user interfacing to change a navigation route. This results in certain functions and features of the infotainment device not being made available to all occupants in the vehicle.

While the aforementioned approach of preventing certain display functionality while the vehicle is in motion minimizes driver distraction, many display functions remain unavailable to other occupants in the vehicle, such as a front seat passenger who could benefit substantially from the availability of such display features while the vehicle is in motion on the road. For example, a passenger in the vehicle could interface with the infotainment system display to coordinate changes to the navigation route. Additionally, a passenger of the vehicle could provide other information such as video information, e-mails, and access the Internet while the vehicle is in motion. The inability of the passenger to actively update destination information in navigation systems and perform other functions while the vehicle is moving is viewed as a detriment to some passengers.

It is therefore desirable to provide for a display system and a method of controlling a display that offers enhanced functionality to a passenger of the vehicle, and reduces distraction to the driver. In particular, it is desirable to provide for such a system and method which allows for enhanced display functionality of infotainment devices made available to passengers of the vehicle, other than to the driver of the vehicle.

### Summary of the Invention

The present invention provides for a display system and method of providing images viewable within an electronically controllable viewing window for controlled viewing by the driver and passenger in a vehicle. According to one aspect of the present invention, the display system includes a display for generating an image that is viewable within a viewing window, and a backlight disposed behind the display for generating light for illuminating the display. The display system has a light control medium for controlling directivity of the light illuminated on the display so that the image is viewable in one of a first viewing window and a second viewing window. The display system further has a control device for controlling the light control medium to change the viewing window so that the image is viewable in the other of the first and second viewing windows.

According to another aspect of the present invention, the method includes the steps of generating light for illuminating a display and passing the light through a light control medium to generate directional light rays, and illuminating the display with the directional light rays to provide an image in a first viewing window. The method also includes the steps of redirecting the directional light rays, and illuminating the display with the redirected directional light rays to provide an image in a second viewing window.

According to a further aspect of the present invention, the display system is employed in a vehicle for displaying images to first and second occupants of the vehicle, such as the driver and a passenger in the vehicle. The control device controls the light control medium to change the viewing window to allow viewing in the viewing window by both the driver and passenger of the vehicle in a first condition and to prevent viewing in the second viewing window by the driver of the vehicle in a second condition. By preventing viewing by the driver during certain conditions such as when the vehicle is moving, the display system is controlled to reduce distraction to the driver.

These and other features, advantages and objects of the present invention will be further understood and appreciated by those skilled in the art by reference to the following specification, claims and appended drawings.

### Brief Description of the Drawings

The present invention will now be described, by way of example, with reference to the accompanying drawings, in which:
FIG. 1 is a front view of a vehicle instrument cluster and dash having an infotainment device equipped with a display system according to the present invention;
FIG. 2 is a block diagram illustrating the infotainment system and controls for controlling the display system;
FIG. 3 is an exploded perspective view of the display system for generating an electronically controllable viewing window;
FIG. 4 is an exploded side view of the display system illustrating directivity of light rays for presenting images;
FIG. 5 is an exploded top view of the display system illustrating directivity of light rays generating an image for display by the passenger of the vehicle only;
FIG. 6 is an exploded top view of the display system illustrating directivity of light rays for generating an image viewable by both the passenger and driver of the vehicle; and
FIG. 7 is a flow diagram illustrating a method of controlling the display system to achieve first and second viewing windows according to the present invention.

### Description of the Preferred Embodiments

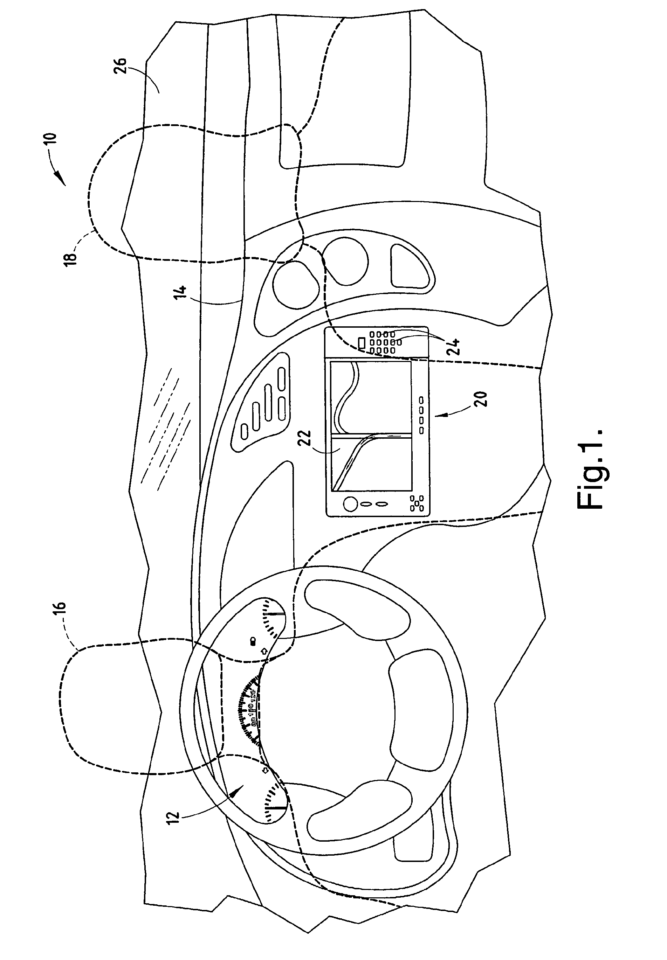

Referring to FIG. 1, an instrument cluster 12 and dash 14 are generally shown within the passenger compartment of a vehicle 10, generally located in front of a driver 16 and a front passenger 18 in the vehicle 10. The instrument cluster 12 is conventionally located in the vehicle dash 14 at the front of the passenger compartment, forward of the steering wheel and steering column. The dash 14 extends in front of both the driver 16 and front passenger 18 and is located below the front windshield 28.

Centrally mounted within the dash 14 in the front side of the passenger compartment is an electronic infotainment system 20 which is readily accessible to both the driver 16 of the vehicle 10 on the left side and the front passenger 18 on the right side. The infotainment system 20 is an electronic system which generally includes any of a variety of information, entertainment, and multimedia systems commonly known in the art. For example, the infotainment system 20 may include any one or a combination of the following systems: an automotive personal computing device, a web browser, an Internet access device, a satellite communication system, a mobile multimedia system, a radio, a television, a DVD player, a navigation system, and a phone/address book lookup system, and other types of electronic devices and systems.

The infotainment system 20 includes a human machine interface (HMI) for allowing occupants, including the driver 16 and front passenger 18 to interface with the infotainment system 20. The HMI includes a display system 22 for displaying images, including video images and text messages, viewable within an electronically controlled viewing window, according to the present invention. The display system 22 is readily viewable by the driver 16 on the left side and front passenger 18 on the right side. However, the display system 22 is controlled such that the viewing window for viewing an image is controllable to prevent viewing by the driver 16 of the vehicle 10 to reduce or prevent distraction of the driver during certain conditions, such as when the vehicle 10 is in motion.

The HMI of the infotainment system 20 also includes input controls 24 for inputting user control commands. It should be appreciated that the HMI, including display system 22, may include any of various inputs and output devices including conventional inputs such as touch-screen inputs, user-depressible input buttons, a microphone, and conventional outputs including audio speakers and LED lights.

The display system 22 presents one or more images for viewing within a controlled viewing window so that the driver 16 and passenger 18 may view the one or more images. The display system 22 displays the one or more images in a first viewing window for viewing by both the driver 16 and passenger 18 when the vehicle is not moving. However, when the vehicle 10 is in motion, the display system 22 is controlled such that an image containing information which may be considered distractive to the driver 16 is presented in a second viewing window that is not viewable by the normally seated driver 16, but is viewable by the passenger 18. This enables the passenger 18 to interact with the infotainment system 20, without sacrificing certain available functions.

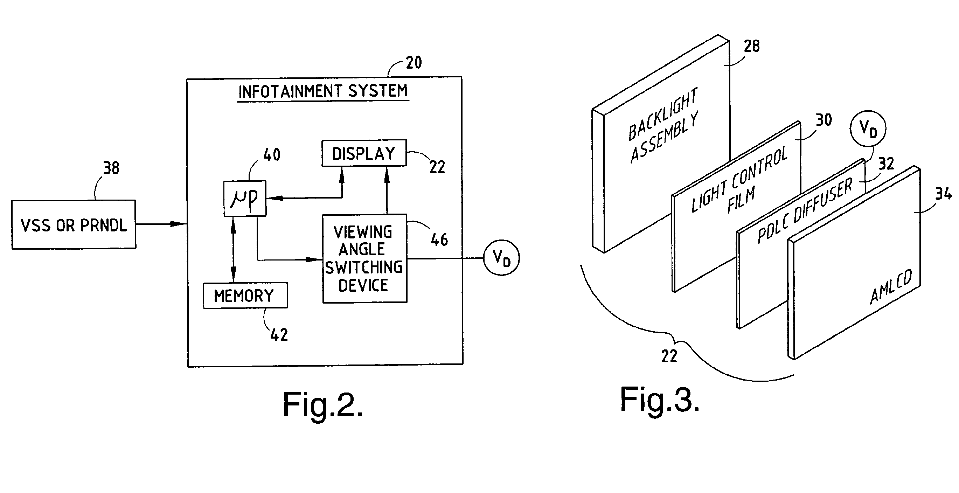

Referring to FIG. 2, the infotainment system 20 is generally illustrated including display system 22, microprocessor 40, and memory 42. The microprocessor 40 and memory 42 are configured to process one or more routines to control the display system 22 to achieve an electronically controlled viewing window according to the present invention. The microprocessor 40 and memory 42 may be integrated in the infotainment system 20 or located separate therefrom. While the viewing window made available with display system 22 is electronically controlled by a microprocessor as described herein, it should be appreciated that any of a variety of analog and digital controls may be employed to control display system 22 in accordance with the present invention.

The infotainment system 20 is also shown equipped with a viewing angle switching device 46. The switching device 46 is coupled to an electrical power supply voltage V_{D}, such as 30 volts AC, and controls the application of supply voltage V_{D} to display system 22 to control the viewing window. The switching device 46 may include an electronic switch controlled by microprocessor 40 to switch between a closed position which applies the voltage V_{D} and an open position which applies 0 volts or ground, according to one embodiment.

The infotainment system 20 receives as an input 38 at least one of a vehicle speed signal (VSS) and a transmission position signal (PRNDL). The vehicle speed signal (VSS) provides a signal indicative of whether the vehicle is in motion. Similarly, the transmission position signal (PRNDL) provides a signal indicative of whether the vehicle transmission is in park mode and, hence, the vehicle is assumed to be not in motion. The microprocessor 40 processes at least one of the vehicle speed signal (VSS) and transmission position signal (PRNDL) input 38 and controls the viewing window of display system 22 via the viewing angle switching device 46.

Referring to FIG. 3, the display system 22 is illustrated in detail according to one embodiment. The display system 22 shown and described herein is an active matrix liquid crystal display having a rear backlight assembly 28, a light control film 30, a polymer dispersed liquid crystal display (PDLC) 32, and a front active matrix liquid crystal display (AMLCD) 34. The active matrix liquid crystal display 34 generates an image viewable to the front thereof which is illuminated by light generated by the backlight assembly 28. The light control film 30 and PDLC diffuser 32 are sandwiched between backlight assembly 28 and AMLCD 34 to provide a medium that controls the directivity of the light such that the image is viewable within an electronically controlled viewing window, as described herein.

The rear backlight assembly 28 may include any of a number of lighting sources for generating light as should be evident to those skilled in the art. According to one embodiment, the backlight assembly 28 may include a fluorescent light source. The fluorescent light source generates multidirectional light rays generally projected forward via a rear reflector.

The front display 34 may include any of a number of image display devices that generate one or more images when light is illuminated thereon. According to one embodiment, the display 34 may include an active matrix liquid crystal display. Other image generating displays such as liquid crystal display devices and similar display technologies may be employed, as display 34 as should be evident to those skilled in the art.

The light control film 30 directs the light illuminated from the backlight assembly 28 into a directional light path that projects to generate an illuminated image in a second viewing window. According to one embodiment, the light control film 30 may include a micro louver film. According to another embodiment, the light control film 30 may include a micro-lens film. It should be appreciated that other light control films for directing light within a directional path may be employed in the display system 22.

The polymer dispersed liquid crystal display 32 is an electronically controlled diffuser medium having a refractive index that is controlled by a voltage V_{D}, such as applied thereto to either direct light within the directional path, or to scatter the light so as to redirect the light within a wider field of view. In one embodiment, the PDLC diffuser 32 has a low refractive index at or near zero and, hence, is substantially transparent to light when a ground or 0 volts signal is applied as the voltage. A substantially transparent PDLC diffuser 32 allows the light rays directed by light control film 30 to continue to pass therethrough and generate an illuminated image via the active matrix liquid crystal display 34 in the second viewing window. As such, the illuminated image is projected in the second viewing window such that it is viewable to the passenger of the vehicle only.

When a voltage potential V_{D} of approximately 30 volts AC is applied to the PDLC, the PDLC diffuser 32 is turned on, which increases the refractive index, and becomes opaque such that light transmitted therethrough scatters. The scattered light is then directed through the active matrix liquid crystal display 34 to present one or more illuminated images within a wider angle first viewing window which is viewable by both the driver and passenger of the vehicle 10. Accordingly, the viewing window of the display can be controlled by controlling the voltage potential applied to the PDLC diffuser 32.

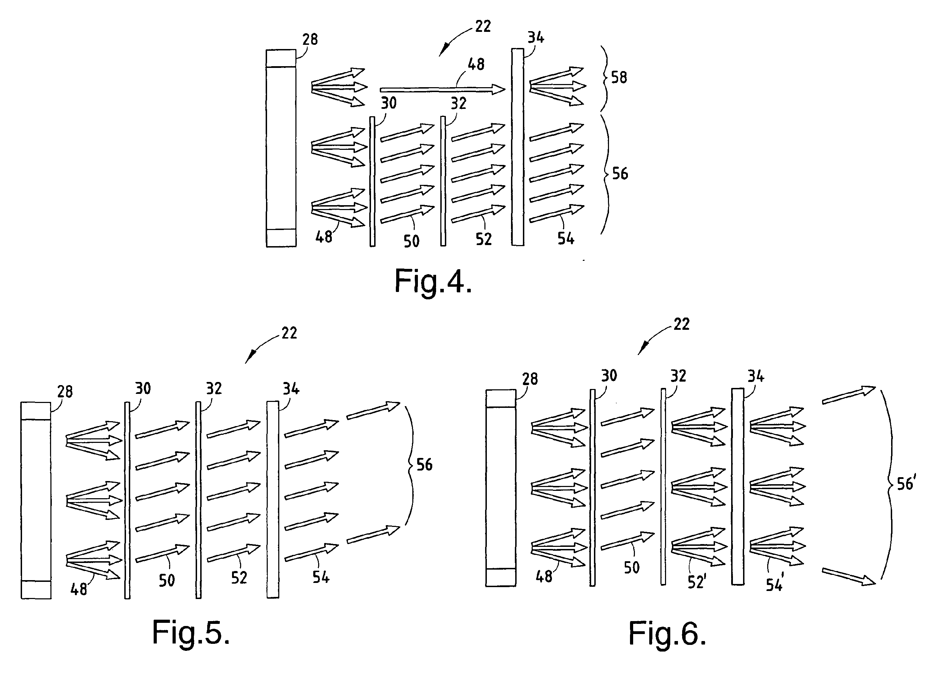

Referring to FIGS. 4-6, the generation of images from the display system 22 are illustrated therein. With particular reference to FIG. 4, the display 22 generates a first image 56 within a second viewing window that is viewable by the passenger of the vehicle and is not viewable by a normally seated driver of the vehicle. Additionally, the display system 22 is shown generating a second image viewable in a wider angle viewing window viewable by both the passenger and driver of the vehicle. It should be appreciated that the display 22 may be configured to include one or more display regions for displaying separate images. In the example shown, the viewing window of image 56 is presented in a viewing window that is controlled such that under certain conditions the image 56 is not viewable by the driver of the vehicle, whereas image 58 is always viewable to both the driver and passenger of the vehicle.

The image generation illustrated in FIGS. 4 and 5 illustrates the illumination of light rays generated via backlight assembly 28 through a light control medium including light control film 30 and PDLC diffuser 32 to generate an image 56 when the PDLC diffuser 32 is turned off, i.e., ground or 0 volts is applied the PDLC diffuser 32. The light control film 30 redirects the fluorescent light rays 48 into a unidirectional path 50. The directional light rays 50 are passed through PDLC diffuser 32 and remain substantially unidirectional due to the transparency of the PDLC diffuser 32 when electrically grounded. As a consequence, the unidirectional light rays 52 pass through the active matrix liquid crystal display 34 and present one or more images within second viewing window 56 which is viewable by the passenger of the vehicle and is not viewable by the normally seated driver of the vehicle.

Referring to FIG. 6, the display 22 is illustrated when the PDLC diffuser 32 is turned on by applying a voltage V_{D}, such as 30 volts AC, to the PDLC diffuser 32. With the PDLC diffuser 32 turned on, the PDLC diffuser 32 is optically opaque which causes the unidirectional light rays 50 to become scattered when passing through opaque PDLC diffuser 32. This causes the light rays to scatter into multiple direction light rays 52'. As a consequence, the multiple direction light rays 52' are applied to illuminate the active matrix liquid crystal display 34, which generates an image that is viewable in a wider angle first viewing window 56'. The wider angle first viewing window 56' is sufficiently wide so as to allow viewing of the images by both the driver and passenger of the vehicle.

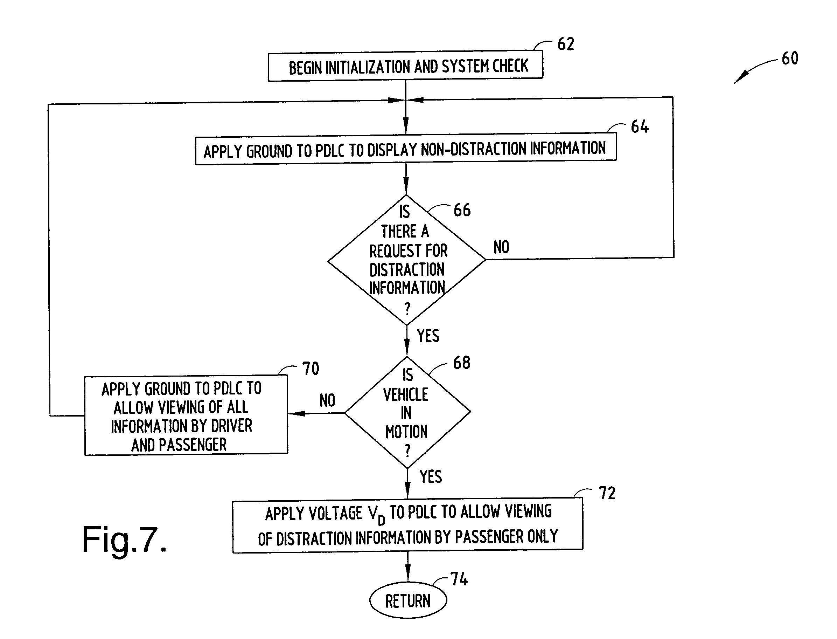

Referring to FIG. 7, a display control routine 60 is provided for controlling the viewing window of the display based on vehicle motion. The routine 60 may be implemented as software processed by a microprocessor and memory that is described above. The control routine 60 begins at step 62 to perform an initialization during power-up, and a system check which may include validating operation of system sensors. Proceeding to step 64, control routine 60 applies an electrical ground to the PDLC diffuser to display non-distraction information. Non-distraction information may include any information that may be considered acceptable for viewing and interaction by the driver of the vehicle when the vehicle is in motion. Next, control routine 60 proceeds to decision step 66 to check if there is a request for distraction information. Distraction information may include any information that may be considered sufficiently distractive to a driver operating the vehicle when the vehicle is in motion. For example, distractive information may include input and output information for changing a navigation route in a navigation system. If there is no request for distraction information, routine 60 returns to step 64.

If there has been a request for distraction information, control routine 60 proceeds to decision step 68 to check if the vehicle is in motion. Vehicle motion can be determined by processing any of a vehicle speed signal, a transmission position signal or other signal that is indicative of vehicle motion. If the vehicle is not in motion, control routine 60 applies an electrical ground or 0 volts to the PDLC diffuser to allow viewing of all information by both the driver and passenger of the vehicle in step 70. As long as the vehicle is not in motion, as determined by either the vehicle speed signal or the transmission position PRNDL signal, control routine 60 allows the viewing of all information by the driver and passenger of the vehicle. Thereafter, routine 60 returns to step 64.

If the vehicle is determined to be in motion in decision step 68, control routine 60 proceeds to step 72 to apply an electrical voltage (e.g., 30 volts AC) to the PDLC diffuser to allow viewing of distraction information by the passenger only. As a consequence of turning the PDLC on, the display system 22 generates an image such that the image is not viewable to a normally seated driver in the vehicle. As a consequence, access to the information presented on the display system 22 is limited to the passenger, provided the vehicle is in motion and the information is determined to be distraction information. Thereafter, routine 60 returns in step 74.

It should be appreciated that the control routine 60 may be processed by the microprocessor and memory integrated in the infotainment system, or other analog or digital controls made available on the vehicle 10. It should further be appreciated that the amount of control of the angle of the viewing window provided by the display system 22 may be controlled so as to provide more than two viewing windows. Additionally, the display system 22 may be located at other locations within the vehicle 10 so as to present images to other passengers within the vehicle 10, without departing from the teachings of the present invention.

It will be understood by those who practice the invention and those skilled in the art, that various modifications and improvements may be made to the invention without departing from the spirit of the disclosed concept. The scope of protection afforded is to be determined by the claims and by the breadth of interpretation allowed by law.

## Claims

1. A display system (22) having an electronically controllable viewing window, said display system comprising:
a display (34) for generating an image that is viewable within a viewing window;
a backlight (28) disposed behind the display (34) for generating light for illuminating the display (34);
a light control medium (30, 32) for controlling directivity of the light illuminated on the display (34) such that the generated image is viewable in one of a first viewing window (56') and a second viewing window (56); and
a control device (40, 46) for controlling the light control medium (30, 32) to change the viewing window to the other of the first viewing window (56') and second viewing window (56).

2. The display system as defined in claim 1, wherein the display system (22) is employed in a vehicle (10) and is viewable in the first viewing window by first and second occupants (16 and 18) in the vehicle (10), wherein the control device (40, 46) controls the light control medium (30, 32) to change the first viewing window (56') to the second viewing window (56) to prevent one of the first and second occupants (16 and 18) from viewing the image and allow viewing by the other of the first and second occupants (16 and 18).

3. The display system as defined in claim 2, wherein the first and second occupants comprise a driver (16) of the vehicle (10) and a passenger (18) in the vehicle, and wherein the driver is prevented from viewing the image in the second viewing window.

4. The display system as defined in claim 1, wherein the light control medium comprises a light control film (30) and a diffuser medium (32).

5. The display system as defined in claim 4, wherein the light control film (30) comprises a micro louver film.

6. The display system as defined in claim 4, wherein the light control film (30) comprises a micro-lens film.

7. The display system as defined in claim 4, wherein the diffuser medium (32) comprises a polymer dispersed liquid crystal display.

8. The display system as defined in claim 1, wherein the display (34) comprises a liquid crystal display.

9. The display system as defined in claim 1, wherein the control device (40, 46) changes the viewing window based on whether the vehicle (10) is moving or not.

10. A method of controlling a viewing window of a display to provide a first viewing window during a first condition and a second viewing window during a second condition, said method comprising the steps of:
generating light (48) for illuminating a display (34);
passing the light (48) through a light control medium (30, 32) so as to generate directional light rays (52');
illuminating (66) the display (34) with the directional light rays (52') to provide an image in a first viewing window (56');
redirecting (72) the directional light rays (52); and
illuminating (72) the display (34) with the redirected directional light rays (52) to provide an image in a second viewing window (56).

11. The method as defined in claim 10, wherein the method is employed on a vehicle (10) to provide the first viewing window (56') for viewing by first and second occupants (16 and 18) of the vehicle (10), and the second viewing window (56) is provided for viewing by only one of the first and second occupants (16 and 18) of the vehicle (10).

12. The method as defined in claim 11, wherein the first occupant (16) of the vehicle is the driver of the vehicle (10) and the second occupant (18) of the vehicle is a passenger in the vehicle (10), and said second viewing window (56) prevents viewing by the driver (16) of the vehicle (10).

13. The method as defined in claim 12 further comprising the steps of determining (68) if the vehicle is moving and controlling the display (34) to illuminate the display (34) with the redirected directional light (52) to provide the image on the second viewing window (56), wherein the driver (16) of the vehicle (10) is prevented from viewing the image in the second viewing window (56) when the vehicle (10) is moving.

14. The method as defined in claim 10, wherein the step of passing the light through the light control medium comprises passing the light through a light control film (30) and a diffuser medium (32).

15. The method as defined in claim 10, wherein the step of passing the light through a light control medium comprises passing the light through a light control film (30) and a polymer dispersed liquid crystal display (32).
